# EUROPÄISCHE PATENTSCHRIFT

(11) **EP 1 070 026 B1**
(45) Veröffentlichungstag und Bekanntmachung des Hinweises auf die Patenterteilung: **04.12.2002**
(21) Anmeldenummer: 00902637.8
(22) Anmeldetag: 27.01.2000
(51) Int. Cl.: C04B 20/02

(54) **BAUSTOFF, VERFAHREN ZUR HERSTELLUNG EINES BAUSTOFFES UND BAUELEMENT**
BUILDING MATERIAL, METHOD FOR PRODUCING A BUILDING MATERIAL AND STRUCTURAL MEMBER
MATERIAU DE CONSTRUCTION, PROCEDE DE PREPARATION D'UN MATERIAU DE CONSTRUCTION ET ELEMENT DE CONSTRUCTION ASSOCIE

(30) Priorität: 02.02.1999 DE 19905131; 06.08.1999 DE 19938382
(43) Veröffentlichungstag der Anmeldung: 24.01.2001
(73) Patentinhaber: Hofbauer, Lothar, 82067 Schäftlarn/Zell (DE); Barthel, Ulrich, 16831 Rheinsberg (DE)
(72) Erfinder: BARTHEL, Ulrich, D-16831 Rheinsberg (DE); JORDAN, Hans-Jürgen, D-17268 Gross Dölln (DE); HOFBAUER, Matthias, D-82067 Zell-Ebenhausen (DE)
(74) Vertreter: Rohmann, Michael, Dr.
(86) Internationale Anmeldenummer: EP0000635
(87) Internationale Veröffentlichungsnummer: WO00046163

(56) Entgegenhaltungen:
- EP-A- 0 470 948
- DE-A- 19 548 645
- DE-A- 19 637 680

## Beschreibung

Die Erfindung betrifft einen Baustoff mit einer Hauptkomponente aus einem silikathaltigen Material. Die Erfindung betrifft fernerhin ein Verfahren zur Herstellung eines Baustoffes. - Der erfindungsgemäße Baustoff lässt sich für die verschiedensten Zwecke einsetzen. Aus dem Baustoff sind insbesondere Bauelemente herstellbar, die beispielsweise plattenförmig, rechteckförmig oder würfelförmig ausgebildet sein können und mit denen Bauwerke, Wände, Böden oder Decken gefertigt werden können. Der erfindungsgemäße Baustoff kann fernerhin zu Mörteln, Putzen, Spachteln, Estrichen, Klebern und dergleichen verarbeitet werden. - Gegenstand der Erfindung ist insbesondere auch ein aus dem erfindungsgemäßen Baustoff hergestelltes Bauelement.

Aus DE 195 48 645 A ist ein Verfahren zur Herstellung von hochwertigen Sekundärrohstoffen aus sortenreinem Abbruchmaterial von Bauwerken bekannt. Bei den Abbruchmaterialien handelt es sich um silikatisch-mineralische Materialien, d.h. um silikathaltiges Material. Als silikathaltiges Material können vorzerkleinerte gebrannte Ziegelsteine oder Dachziegel oder Asbestzementplatten eingesetzt werden. Das aufbereitete Abbruchmaterial wird einer tribomechanischen und/oder tribochemischen Behandlung unterzogen.

Aus dem Stand der Technik ist weiterhin eine Vielzahl verschiedener Baustoffe und Bauelemente bekannt. DE 41 32 009 A1 beschreibt beispielsweise einen Baustoff, der aus Lehm, Sägemehl und Hobelspänen, gehäckseltem Stroh, Zement und Gips sowie Wasser besteht. Dieser Baustoff ist pump- und spritzfähig und kann auf einen geeigneten Putzträger aufgetragen werden. Dadurch soll eine homogene Lehmbeschichtung hergestellt werden. - Aus DE 41 40 093 A1 ist fernerhin die Herstellung von Leichtlehmsteinen aus Stroh und Lehm bekannt. Ein solcher Leichtlehmstein wird unter geringem Wassereinsatz und einer weitgehenden Zerkleinerung und Pelletierung der Ausgangsstoffe hergestellt.

Die aus dem Stand der Technik bislang bekannten Baustoffe oder die daraus hergestellten Bauelemente zeichnen sich in der Regel durch beachtliche Nachteile aus. Eine Mehrzahl der bekannten Baustoffe oder Bauelemente weist keine ausreichende Feuchtigkeitsbeständigkeit auf. Viele Baustoffe sind in umwelttechnischer Hinsicht problematisch und lassen sich nicht ohne weiteres entsorgen. Bestimmte Zusatzstoffe in manchen bekannten Baustoffen und Bauelementen führen langfristig zu unerwünschten Ausgasungen. Die bekannten Baustoffe erfüllen nicht im erforderlichen Maße die bauphysikalischen und bauphysiologischen Anforderungen für das menschliche Wohlbefinden in Gebäuden, beispielsweise in Wohn- oder Büroräumen, die mittels dieser Baustoffe oder der daraus hergestellten Bauelemente gefertigt sind. Ein erheblicher Nachteil der meisten bekannten Baustoffe und Bauelemente sind die beachtlichen Kosten, die bei ihrer Herstellung anfallen. Insbesondere die hierfür erforderlichen Ausgangsstoffe sind aufgrund weiter Transportwege sowie aufwendiger Aufbereitungsmaßnahmen in der Regel sehr kostenintensiv.

Demgegenüber liegt der Erfindung das technische Problem zugrunde, einen Baustoff der eingangs genannten Art anzugeben, mit dem die vorstehend beschriebenen Nachteile vermieden werden, der insbesondere auf einfache und kostengünstige Weise herstellbar ist und der auch langfristig allen Anforderungen entspricht. Der Erfindung liegt fernerhin das technische Problem zugrunde, ein Verfahren zur Herstellung eines solchen Baustoffes anzugeben.

Zur Lösung dieses technischen Problems lehrt die Erfindung zunächst einen Baustoff mit einer Hauptkomponente aus einem silikathaltigen Material,
wobei das silikathaltige Material als Nebenprodukt einer Betonzuschlagwaschanlage und/oder Mörtelzuschlagwaschanlage und/oder Kieswaschanlage und/oder Sandwaschanlage anfällt, wobei das silikathaltige Material in der Anlage durch Waschen mit Wasser und mit grobkörnigen Teilchen mit einer Korngröße > 0,1 mm mechanisch aktiviert wurde,
wobei zumindest 50 Gew.-% des silikathaltigen Materials eine Korngröße < 0,1 mm aufweist,
wobei zumindest 50 Gew.-% des silikathaltigen Materials aus Schluff besteht
und wobei zumindest zwei Gew.-% eines Bindemittels enthalten sind.

Mechanische Aktivierung meint im Rahmen der Erfindung insbesondere eine Reibungsbeaufschlagung des silikathaitigen Materials bzw. eine Beaufschlagung mit Reibungskräften. Erfindungsgemäß ist das silikathaltige Material durch Waschen mit grobkörnigeren Teilchen mit einer Korngröße > 0,1 mm, mechanisch aktivierbar. Bei den grobkörnigeren Teilchen handelt es sich zweckmäßigerweise ebenfalls um silikathaltiges Material. Das Waschen findet zweckmäßigerweise mit Wasser statt. Durch das beim Waschen auftretende Aneinanderreiben der verschiedenen Teilchen findet die erfindungsgemäße mechanische Aktivierung statt. Ein solches Waschen wird in Waschanlagen für Zuschlagstoffe der Beton- oder Mörtelindustrie, in Kieswaschanlagen, in Sandwaschanlagen und dergleichen durchgeführt.

Erfindungsgemäß fällt das silikathaltige Material als Nebenprodukt einer Betonzuschlagwaschanlage und/oder Mörtelzuschlagwaschanlage und/oder Kieswaschanlage und/oder Sandwaschanlage an und ist das silikathaltige Material durch das in der Waschanlage stattfindende Waschen mechanisch aktivierbar. Die mechanische Aktivierung des silikathaltigen Materials findet hier durch das Waschen mit grobkörnigeren Teilchen des Betonzuschlags oder Mörtelzuschlags oder des Kieses oder des Sandes statt. Diese grobkörnigen Teilchen haben eine Korngröße > 0,063 mm oder > 0,1 mm. Die mechanische Aktivierung wird durch die mechanischen Kräfte bzw. durch die Reibungskräfte, die beim Waschen zwischen den grobkörnigeren Teilchen und dem feinkörnigen silikathaltigen Material auftreten, bewirkt. Durch diese mechanische Aktivierung werden dem feinkörnigen silikathaltigen Material überraschende Eigenschaften verliehen, die beim erfindungsgemäßen Einsatz in dem Baustoff zu beachtlichen Vorteilen führen. Es wird angenommen, dass infolge der mechanischen Aktivierung eine erhöhte physiko-chemische Oberflächenreaktivität der Teilchen des feinkörnigen silikathaltigen Materials erzeugt wird. - In der Praxis werden den obengenannten Waschanlagen die grobkörnigen Bestandteile mit einer Korngröße > 0,063 mm entnommen und für Bauzwecke bzw. als Betonzuschlagstoff oder Mörtelzuschlagstoff eingesetzt. Die feinkörnigen Bestandteile bzw. die mineralischen Feinstbestandteile fallen als Abfallstoffe, insbesondere als Abschlämmprodukte und/oder Abwaschprodukte in diesen Waschanlagen an. Diese Nebenprodukte wurden bislang als für Bauzwecke ungeeignet angesehen. Die aufschlämmbaren bzw. abschlämmbaren feinkörnigen mineralischen Abwaschprodukte aus Betonzuschlagwaschanlagen sind beispielsweise für die Betonherstellung ungeeignet, weil sie die Schwindwerte, Quellwerte und Festigkeitswerte eines Betons nachträglich beeinflussen. Diese als Abschlämmprodukte und/oder Abwaschprodukte und/oder Absetzprodukte anfallenden anorganischen Feinstbestandteile mussten bislang aufwendig und kostspielig entsorgt werden. Der Erfindung liegt nun die Erkenntnis zugrunde, dass diese in großen Mengen anfallenden und bisher kostenintensiv zu entsorgenden Nebenprodukte aus Betonzuschlagwaschanlagen, Mörtelzuschlagwaschanlagen, Kieswaschanlagen und Sandwaschanlagen hervorragend zur Herstellung der erfindungsgemäßen Baustoffe eingesetzt werden können. - Es liegt im Rahmen der Erfindung, dass die erfindungsgemäß eingesetzten silikathaltigen Materialien geringe Mengen von Wasser aufweisen können, die insbesondere aus einer der vorgenannten Waschanlagen stammen.

Gemäß Patentanspruch 1 weist zumindest 50 Gew.-% des silikathaltigen Materials eine Korngröße < 0,1 mm auf. Nach einer Ausführungsform der Erfindung haben zumindest 70 Gew.-%, vorzugsweise zumindest 80 Gew.-%, sehr bevorzugt zumindest 90 Gew.-% des silikathaltigen Materials eine Korngröße < 0,1 mm. Nach einer weiteren Ausführungsform der Erfindung weisen 90 bis 100 Gew.-% des silikathaltigen Materials eine Korngröße < 0,1 mm auf. Es liegt im Rahmen der Erfindung, dass zumindest 50 Gew.-% des silikathaltigen Materials eine Korngröße < 0,063 mm aufweisen. Nach einer Ausführungsform der Erfindung haben zumindest 70 Gew.-%, vorzugsweise zumindest 80 Gew.-%, sehr bevorzugt zumindest 90 Gew.-% des silikathaltigen Materials eine Korngröße < 0,063 mm. Nach einer anderen Ausführungsform der Erfindung weisen 90 bis 100 Gew.-% des silikathaltigen Materials eine Korngröße < 0,063 mm auf. Vorzugsweise besteht der Anteil des silikathaltigen Materials, der eine Korngröße < 0,1 mm aufweist oder der eine Korngröße < 0,063 mm aufweist zu weniger als 40 Gew.-% aus einem Material, das einen Korndurchmesser < 0,005 mm hat. Nach einer bevorzugten Ausführungsform der Erfindung bestehen zumindest 70 Gew.-%, sehr bevorzugt zumindest 90 Gew.-% des silikathaltigen Materials aus Schluff. Nach einer anderen Ausführungsform der Erfindung bestehen zumindest 90 bis 100 Gew.-% des silikathaltigen Materials aus Schluff. Nach sehr bevorzugter Ausführungsform der Erfindung wird ein silikathaltiges Material mit weniger als 30 Gew.-%, vorzugsweise mit weniger als 20 Gew.-% an alumo-silikatischen Bestandteilen eingesetzt.

Es liegt im Rahmen der Erfindung, dass zumindest 10 Gew.-% der Hauptkomponente in dem Baustoff enthalten sind. Nach bevorzugter Ausführungsform der Erfindung sind zumindest 20 Gew.-%, sehr bevorzugt zumindest 30 Gew.-% der Hauptkomponente in dem Baustoff enthalten. Es liegt im Rahmen der Erfindung, dass der Baustoff 40 bis 90 Gew.-% der Hauptkomponente enthält. Wenn aus dem erfindungsgemäßen Baustoff ein Bauelement, beispielsweise eine Platte oder ein quader- oder würfelförmiger Baustein hergestellt wird, enthält der Baustoff zweckmäßigerweise 40 bis 90 Gew.-% der Hauptkomponente. Wenn ein Putz oder Mörtel aus dem erfindungsgemäßen Baustoff hergestellt wird, enthält der Baustoff vorzugsweise 10 bis 60 Gew.-% der Hauptkomponente. Die vorstehenden, die Hauptkomponente betreffenden Gew.-%-Angaben beziehen sich auf den Baustoff ohne Zugabe von Wasser.

Vorzugsweise sind in dem Baustoff neben der Hauptkomponente zumindest 2 Gew.-% eines Bindemittels enthalten. Zweckmäßigerweise enthält der Baustoff 5 bis 70 Gew.-%, bevorzugt 5 bis 60 Gew.-% zumindest eines Bindemittels. Nach einer Ausführungsform der Erfindung wird ein hydraulisches Bindemittel, beispielsweise ein hydraulisches Bindemittel mineralischen Ursprungs eingesetzt. Als hydraulisches Bindemittel wird vorzugsweise zumindest ein Zement und/oder Kalk und/oder Gips verwendet. Es liegt auch im Rahmen der Erfindung, Asche, vorzugsweise Flugasche, als Bindemittel einzusetzen. Die vorstehenden auf das Bindemittel bezogenen Gew.-%-Angaben beziehen sich auf den Baustoff ohne Zugabe von Wasser.

Nach einer bevorzugten Ausführungsform der Erfindung enthält der Baustoff zumindest 0,2 Gew.-%, vorzugsweise zumindest 0,5 GeW.-% an Spänen und/oder Fasern. Es liegt im Rahmen der Erfindung, dass der Baustoff 0,5 Gew.-% bis 25 Gew.-%, bevorzugt 0,5 Gew.-% bis 20 Gew.-% an Spänen und/oder Fasern enthält. Die vorstehenden auf die Späne und/oder Fasern bezogenen Gew.-%-Angaben meinen den Baustoff bzw. die Baustoffmischung ohne Zugabe von Wasser. Es liegt im Rahmen der Erfindung, dass der Baustoff natürliche Fasern und/oder Kunststofffasern und/oder Glasfasern enthält. Natürliche Fasern meint insbesondere Holzfasern und/oder Kokosfasern und/oder Sisalfasern und/oder Hanffasern und/oder Strohfasern. Kunststofffasern meint insbesondere Kunststofffasern mit hydrophilen Eigenschaften. Als Kunststofffasern können Polyalkenfasern und/oder Polyacrylnitrilfasern und/oder Polyvinylacetatfasern eingesetzt werden. Als Polyalkenfasern werden zweckmäßigerweise Polypropylenfasern verwendet. Nach bevorzugter Ausführungsform der Erfindung enthält der Baustoff Holzfasern und/oder Holzspäne. Die Faserlänge der Holzfasern und/oder Holzspäne beträgt dabei zweckmäßigerweise 5 bis 10 mm oder 5 bis 20 mm. Der Durchmesser der Holzfasern und/oder Holzspäne beträgt 0,2 bis 3 mm, vorzugsweise 0,3 bis 2 mm. Durch den Zusatz von Fasern und/oder Spänen kann sehr effektiv die Normbiegezugfestigkeit des aus dem erfindungsgemäßen Baustoff hergestellten Endproduktes erhöht werden.

Zur Lösung des erfindungsgemäßen technischen Problems lehrt die Erfindung weiterhin ein Verfahren nach Patentanspruch 2. - Es liegt im Rahmen der Erfindung, dass das mechanisch aktivierte silikathaltige Material zusätzlich mechanisch und/oder chemisch und/oder biologisch behandelt wird, bevor es in dem erfindungsgemäßen Baustoff eingesetzt wird. Nach sehr bevorzugter Ausführungsform der Erfindung wird das mechanisch aktivierte silikathaltige Material vor dem Mischen mit dem zumindest einen Zusatzstoff zumindest einer Nachaktivierung unterworfen. Es liegt im Rahmen der Erfindung, dass die Nachaktivierung durch Feuchtigkeitseinfluss und/oder Lufteinfluss hervorgerufen wird. Nach sehr bevorzugter Ausführungsform der Erfindung wird das mechanisch aktivierte silikathaltige Material vor dem Mischen mit dem zumindest einen Zusatzstoff gewettert. Hierzu wird das mechanisch aktivierte silikathaltige Material im Freien gelagert, und zwar zweckmäßigerweise zumindest zwei Wochen, vorzugsweise mehrere Monate. Das Wettern, d. h. die Lagerung des silikathaltigen Materials im Freien kann beispielsweise 1 bis 15 Monate dauern. Es hat sich gezeigt, dass sich das nach dieser bevorzugten Ausführungsform gewetterte silikathaltige Material ganz besonders für den erfindungsgemäßen Baustoff eignet.

Nach sehr bevorzugter Ausführungsform der Erfindung wird das mechanisch aktivierte silikathaltige Material vor dem Mischen mit dem zumindest einen Zusatzstoff in einer Kollereinrichtung gekollert. Dabei werden zweckmäßigerweise noch im Ausgangsstoff vorhandene gröbere Bestandteile zerkleinert. Es liegt im Rahmen der Erfindung, dass während des Kollerns eine weitere Nachaktivierung, nämlich eine weitere mechanische Aktivierung des silikathaltigen Materials stattfindet. Offenbar bewirkt die beim Kollern auftretende Reibung zwischen den Partikeln eine weitere physiko-chemische Aktivierung der Partikeloberflächen. Jedenfalls eignet sich das gekollerte silikathaltige Material ganz besonders für den erfindungsgemäßen Baustoff. Es liegt im Rahmen der Erfindung, dass das mechanisch aktivierte silikathaltige Material der Kollereinrichtung im erdfeuchten Zustand zugeführt wird. Während des Kollerns kann Wasser, insbesondere Regenwasser, zugesetzt werden und können weitere Additive, wie beispielsweise hochmolekulare Polyelektrolyte, zugegeben werden. - Nach sehr bevorzugter Ausführungsform der Erfindung wird das mechanisch aktivierte silikathaltige Material zunächst gewettert und nach dem Wettern gekollert.

Nach einer bevorzugten Ausführungsform findet ein Feinwalzen des mechanisch aktivierten silikathaltigen Materials vor dem Mischen mit dem zumindest einen Zusatzstoff statt. Dabei wird das Material auf eine gewünschte Korngröße zerkleinert. Es kann lediglich ein Feinwalzwerk eingesetzt werden oder es können mehrere Feinwalzwerke hintereinander angeordnet werden, wobei zweckmäßigerweise eine stufenweise Zerkleinerung gröberer Bestandteile stattfindet. Es liegt im Rahmen der Erfindung, dass beim Feinwalzen eine Nachaktivierung, insbesondere eine mechanische Aktivierung des silikathaltigen Materials stattfindet. Während des Feinwalzens können weitere Additive wie beispielsweise hochmolekulare Polyelektrolyte zugefügt werden. Zweckmäßigerweise findet das Feinwalzen nach einem vorgeschalteten Kollern statt. - Nach sehr bevorzugter Ausführungsform der Erfindung wird das mechanisch aktivierte silikathaltige Material zunächst gewettert, dann gekollert und anschließend feingewalzt.

Vorzugsweise im Anschluss an das Wettern und/oder Kollern und/oder Feinwalzen wird dem silikathaltigen Material zumindest ein Zusatzstoff zugemischt. Zweckmäßigerweise wird dabei zumindest ein Bindemittel, vorzugsweise ein hydraulisches Bindemittel zugefügt. Bei dem Bindemittel mag es sich um Zement und/oder Kalk und/oder Gips und/oder Asche handeln. Vor, während oder nach dem Mischen mit dem zumindest einen Zusatzstoff wird Wasser, insbesondere Regenwasser zugegeben. Nach bevorzugter Ausführungsform der Erfindung werden fernerhin Fasern und/oder Späne zugemischt. Weiter oben wurde bereits erläutert, welche Fasern und/oder Späne in diesem Zusammenhang besonders geeignet sind. Grundsätzlich können die verschiedensten anorganischen, organischen und/oder biologischen Zusatzstoffe zugemischt werden, um vor allem die Verarbeitungsfähigkeit zu verbessern und/oder um bestimmte Baustoffeigenschaften zu erzeugen. So können beispielsweise hochmolekulare Polyelektrolyte und/oder hochmolekulare Polywachse zugefügt werden. Fernerhin können anorganische Zusätze, wie Kieselsäure und/oder Soda zugegeben werden. Es liegt weiterhin im Rahmen der Erfindung, dass Füllstoffe, wie beispielsweise Ziegelmehl und/oder Steinmehl, zugemischt werden. Außerdem können organische Zusatzstoffe, wie beispielsweise Glykol und/oder Alkoholate und/oder Glyzerin zugegeben werden. Weiterhin liegt es im Rahmen der Erfindung, dass zumindest ein biologischer Zusatzstoff aus der Gruppe "Kasein, Harnstoff, Zuckerderivat, Tannin, Lignin, Molke, Melasse, Gülle" zugemischt wird. - Das Mischen mit dem zumindest einen Zusatzstoff wird vorzugsweise in einem Zwangschargenmischer durchgeführt. Es liegt im Rahmen der Erfindung, dass der Zwangschargenmischer ausreichend Scherkräfte auf das Mischgut überträgt, um Agglomerate und Konglomerate effektiv zu zerschlagen. - Im Anschluss an das Mischen mit dem zumindest einen Zusatzstoff kann die Mischgutcharge zum Puffern und Reifen des Mischgutes abgetrennt werden.

Für den Mischvorgang wird die Art und/oder die Menge des Zusatzstoffes oder der Zusatzstoffe in Abhängigkeit davon gewählt, wie der erfindungsgemäße Baustoff eingesetzt werden soll, d. h. zur Herstellung von Bauelementen oder als Mörtel, Putz, Spachtel, Estrich, Kleber oder dergleichen. - Wenn erfindungsgemäße Bauelemente, beispielsweise in Form von Platten oder Steinen, hergestellt werden sollen, findet vorzugsweise zunächst eine Vorverdichtung und Homogenisierung des Mischgutes statt. Zweckmäßigerweise wird das Mischgut im Anschluss daran verpresst und bevorzugt erfolgt dann die Formgebung zu einem Bauelement-Formstrang. Daraufhin kann der Formstrang zu Segmenten geschnitten werden. Zweckmäßigerweise werden die Segmente anschließend getrocknet. Danach findet bevorzugt ein Beschneiden der Segmente zu den Bauelementen statt. Nachfolgend wird ein bevorzugtes erfindungsgemäßes Verfahren zur Herstellung von Bauelementen durch Aufzählung der einzelnen Verfahrensschritte angegeben:
a) Wettern des mechanisch aktivierten silikathaltigen Materials,
b) Kollern des gewetterten Materials,
c) Feinwalzen des gekollerten Materials,
d) Mischen des silikathaltigen Materials mit zumindest einem Zusatzstoff und mit Wasser,
e) Vorverdichtung und Homogenisierung des Mischguts,
f) Verpressen des Mischguts und Formgebung zu einem Bauelement-Formstrang,
g) Schneiden des Formstrangs zu Segmenten,
h) Trocknen der Segmente und
i) Beschneiden der Segmente zu Bauelementen.

Es liegt im Rahmen der Erfindung, dass nach dem Verfahrensschritt d) oder nach dem Verfahrensschritt e) das jeweilige Zwischenprodukt mittels bekannter Maßnahmen zu Mörteln, Putzen, Spachteln, Estrichen oder Klebern verarbeitet wird. Fernerhin können aus dem Zwischenprodukt auch Formen für Relief- und Hohlkörper hergestellt werden. - Nach dem Verfahrensschritt i) können die erhaltenen Bauelemente weiter bearbeitet werden, beispielsweise durch Kantenprofilierung und/oder durch Schleifen der Oberfläche und/oder durch eine Oberflächenbeschichtung. Die mit dem erfindungsgemäßen Verfahren hergestellten Bauelemente können grundsätzlich die verschiedensten Formen haben und beispielsweise plattenförmig, quaderförmig, würfelförmig oder zylinderförmig ausgebildet sein. Die Bauelemente können profilierte Oberflächen und/oder Hohlräume, wie beispielsweise Luftkanäle, aufweisen. Nach einer Ausführungsform der Erfindung werden plattenförmige Bauelemente für Fußböden verwendet und weisen die plattenförmigen Bauelemente in ihrer Oberfläche kanalartige Profilierungen auf, in welche Leitungen oder Rohre von Fußbodenheizungen eingesetzt werden können.

Der Erfindung liegt die Erkenntnis zugrunde, dass auf einfache und wenig aufwendige sowie kostengünstige Weise Baustoffe oder Bauelemente hergestellt werden können, wenn nach der erfindungsgemäßen Lehre gearbeitet wird. Es werden Baustoffe und Bauelemente erhalten, die sich durch eine hohe Feuchtigkeitsbeständigkeit und Frostbeständigkeit auszeichnen und im Hinblick auf ihre mechanischen Eigenschaften allen Anforderungen genügen. Die Baustoffe und Bauelemente entsprechen allen ökologischen, bauphysikalischen und bauphysiologischen Anforderungen. Wenn die erfindungsgemäßen Baustoffe und Bauelemente zur Fertigung von Gebäuden, beispielsweise Wohn- und Büroräumen eingesetzt werden, tragen sie überraschenderweise zu einem gesteigerten Wohlbefinden der sich in diesen Gebäuden oder Räumen aufhaltenden Menschen bei. Die erfindungsgemäßen Baustoffe und Bauelemente zeichnen sich im Hinblick auf einen Brandschutz, auf eine Wärmedämmung sowie im Hinblick auf einen Trittschallschutz durch hervorragende Eigenschaften aus. Hervorzuheben ist auch, dass die Baustoffe in umwelttechnischer Hinsicht unproblematisch sind und einfach entsorgt werden können. Von besonderer Bedeutung ist in diesem Zusammenhang, dass die zu entsorgenden Baustoffe oder Bauelemente ohne weiteres so aufbereitet werden können, dass sie wieder zur Herstellung eines erfindungsgemäßen Baustoffes eingesetzt werden können. - Die im Rahmen der Erfindung hergestellten Bauelemente können in vielfältiger Hinsicht verwendet werden, beispielsweise für den Wandaufbau, Deckenaufbau und Fußbodenaufbau von Gebäuden. Die Bauelemente können beispielsweise als Wärmedammplatten oder Leichtbauplatten eingesetzt werden. - Nachfolgend wird die Erfindung anhand von Ausführungsbeispielen näher erläutert:

### Ausführungsbeispiel 1:

Zur Herstellung einer Wärmedämmplatte wurden im Zwangschargenmischer 80 Gewichtsteile eines mechanisch aktivierten silikathaltigen Materials aus einer Betonzuschlagwaschanlage mit 20 Gewichtsteilen Zement sowie mit Wasser vermischt. Die Wassermenge wurde so gewählt, dass sich ein Wasser-Feststoff-Verhältnis von 0,45 ergab. Nach ausreichender Durchmischung der vorgenannten Komponenten wurden 20 Gewichtsteile fein zerkleinerter Holzspäne mit einer Faserlänge bis zu 10 mm und einem Durchmesser von etwa 0,3 mm bis 2 mm hinzugegeben. An die Mischung im Zwangschargenmischer schloss sich eine Phase der Pufferung, Beruhigung und Reife des Mischgutes an. Daraufhin wurde das Mischgut in einer Vorpresse weiter vorverdichtet und homogenisiert. Dann wurde das Mischgut durch eine Arbeitspresse mit einer Vorpressstufe mit Doppelwellenmischanlage und daran anschließende Schneckenpresse geleitet und durch einen am Ende der Arbeitspresse angeordneten Presskopf zur Formgebung gedrückt. Der auswechselbare Presskopf der Arbeitspresse verleiht dem Bauelement einerseits die gewünschte Kontur und andererseits können mit seiner Hilfe auch Hohlräume, insbesondere Luftkanäle im Inneren des Bauelementes bzw. der Platte erzeugt werden. Mit Hilfe einer Schneidvorrichtung wurden dann Segmente von dem erzeugten fortlaufenden Bauelement-Formstrang abgetrennt. Nach einer Zwischenlagerung bzw. -trocknung wurde das Segment zu der gewünschten Form beschnitten. Die resultierenden Abschnitte konnten nach entsprechender Zerkleinerung wieder dem Ausgangsstoff zur Herstellung des Baustoffes zugeführt werden. - Die erhaltene Wärmedämmplatte wies eine Trockenrohdichte (28d) von 0,9 kg/dm³, eine Normdruckfestigkeit (28d) von 6 N/mm², eine Normbiegezugfestigkeit (28d) von 3 N/mm² sowie eine Wärmeleitfähigkeit von 0,3 W/mK auf.

### Ausführungsbeispiel 2:

Zur Herstellung einer frost- und taustabilen Leichtplatte wurden 70 Gewichtsteile von mechanisch aktiviertem silikathaltigen Material (mit geringem Wassergehalt) aus einer Betonzuschlagwaschanlage mit 30 Gewichtsteilen Zement und Wasser im Zwangschargenmischer gemischt. Die eingesetzte Wassermenge wurde so gewählt, dass ein Wasser-Feststoff-Verhältnis von 0,38 erhalten wurde. Nach Durchmischung dieser Ausgangskomponenten wurden 12,5 Gewichtsteile Holzspäne der im Ausführungsbeispiel 1 beschriebenen Art zugegeben. Im übrigen wurden die gleichen Verfahrensschritte wie im Ausführungsbeispiel 1 angewendet. Letztendlich wurde eine Leichtbauplatte erhalten, die eine Trockenrohdichte (28d) von 1 kg/dm³ sowie folgende Parameter aufwies: Normdruckfestigkeit (28d) von 16 N/mm² und eine Normbiegezugfestigkeit (28d) von 8 N/mm² ohne Verlust an Masse bzw. eine Druck- und Biegezugfestigkeit bis 80 Zyklen/12 h bei Temperaturen von -30 °C bis +30 °C.

### Ausführungsbeispiel 3:

Zur Herstellung eines frost- und taustabilen Bauelementes in Form eines Prismas wurden 70 Gewichtsteile des silikathaltigen Materials gemäß Ausführungsbeispiel 2 mit 30 Gewichtsteilen Zement und Wasser vermischt. Das Wasser-Feststoff-Verhältnis betrug 0,4. Nach Durchmischung der genannten Ausgangskomponenten wurden 6,2 Gewichtsteile kurzgeschnittene Kokosfasern mit einer Länge von 0,5 bis 3cm zugemischt. Anschließend wurden die gleichen Verfahrensschritte wie in den Ausführungsbeispielen 1 und 2 durchgeführt. Dabei wurde ein Prisma von hoher Biegezugfestigkeit mit den folgenden Parametern erhalten: Trockenrohdichte (28d) 1,2 kg/dm³, Normdruckfestigkeit (28d) 14 N/mm², Biegezugfestigkeit von 14 N/mm². Bei Temperaturen von -30 °C bis +30 °C hat ein solches Bauelement ohne Verlust an Masse eine gleichbleibende Druck- und Biegefestigkeit bis 80 Zyklen/12 h.

### Ausführungsbeispiel 4:

Zur Herstellung eines frost- und taustabilen Bauelementes in Form eines Würfels wurden 50 Gewichtsteile von mechanisch aktiviertem silikathaltigen Material aus einer Betonzuschlagwaschanlage mit 50 Gewichtsteilen Zement sowie mit Wasser vermischt. Das Wasser-Feststoff-Verhältnis betrug 0,2. Daraufhin wurden die gleichen Verfahrensschritte wie in den Ausführungsbeispielen 1 bis 3 durchgeführt. Der erhaltene Probekörper wies die folgenden Parameter auf: Normdruckfestigkeit von 48 N/mm². Bei Temperaturen von -30 °C bis +30 °C hat dieser Körper ohne Verlust an Masse eine gleichbleibende Druck- und Biegefestigkeit bis 80 Zyklen/12 h.

### Ausführungsbeispiel 5:

Zur Herstellung eines Baustoffes, der als Innentrockenputz verwendet werden kann, wurden 50 Gewichtsteile an mechanisch aktiviertem silikathaltigen Material (mit wenig Wassergehalt) aus einer Betonzuschlagwaschanlage mit 10 Gewichtsteilen Grubenlehm, 10 Gewichtsteilen Zement sowie 30 Gewichtsteilen Sand als Füllstoff und mit Regenwasser vermischt. Das Wasser-Feststoff-Verhältnis betrug 0,2. Nach Vermischung der genannten Ausgangskomponenten wurden 0,7 Gewichtsteile Holzspäne zugesetzt und die Komponenten wurden weiterhin innig durchmischt. Der erhaltene Baustoff (Innenputz) wies die folgenden Parameter auf: Trockenrohdichte (28d) von 1,6 kg/dm³, Normdruckfestigkeit (28d) 2,5 N/mm², Normbiegezugfestigkeit (28d) von 1,4 N/mm², reversible Wasseraufnahme und -abnahme von 30 Gew.-%.

## Patentansprüche

1. Baustoff mit einer Hauptkomponente aus einem silikathaltigen Material,
wobei das silikathaltige Material als Nebenprodukt einer Betonzuschlagwaschanlage und/oder Mörtelzuschlagwaschanlage und/oder Kieswaschanlage und/oder Sandwaschanlage anfällt, wobei das silikathaltige Material in der Anlage durch Waschen mit Wasser und mit grobkörnigen Teilchen mit einer Korngröße > 0,1 mm mechanisch aktiviert wurde,
wobei zumindest 50 Gew-% des silikathaltigen Materials eine Korngröße < 0,1 mm aufweist,
wobei zumindest 50 Gew.-% des silikathaltigen Materials aus Schluff besteht
und wobei zumindest zwei Gew.-% eines Bindemittels enthalten sind.

2. Verfahren zur Herstellung eines Baustoffes nach Anspruch 1, wobei ein silikathaltiges Material eingesetzt wird, das als Nebenprodukt einer Betonzuschlagwaschanlage und/oder Mörtelzuschlagwaschanlage und/oder Kieswaschanlage und/oder Sandwaschanlage anfällt und in der Anlage durch Waschen mit Wasser und mit grobkörnigen Teilchen mit einer Korngröße > 0,1 mm mechanisch aktiviert wurde und von dem zumindest 50 Gew.-% eine Korngröße < 0,1 mm aufweisen,
wobei zumindest 50 Gew.-% des silikathaltigen Materials aus Schluff besteht
und wobei das silikathaltige Material mit zumindest einem Bindemittel gemischt wird.

3. Verfahren nach Anspruch 2, wobei das mechanisch aktivierte silikathaltige Material vor dem Mischen mit dem Bindemittel zumindest einer Nachaktivierung unterworfen wird.

4. Verfahren nach einem der Ansprüche 2 oder 3, wobei vor, während oder nach dem Mischen mit dem Bindemittel Wasser zugegeben wird.

5. Verfahren nach einem der Ansprüche 2 bis 4, wobei Späne und/oder Fasern zu dem silikathaltigen Material gegeben werden.

6. Bauelement aus einem Baustoff nach Anspruch 1 und hergestellt mit einem Verfahren nach einem der Ansprüche 2 bis 5.

## Claims

1. A building material having a main component comprising a silicate-containing material,
wherein the silicate-containing material occurs as a by-product of a concrete additive washing installation and/or a mortar additive washing installation and/or a gravel washing installation and/or a sand washing installation, wherein the silicate-containing material has been mechanically activated in the installation by washing with water and with coarse-grained particles with a grain size > 0.1 mm,
wherein at least 50 % by weight of the silicate-containing material has a grain size < 0.1 mm,
wherein at least 50 % by weight of the silicate-containing material consists of coarse clay,
and wherein at least two % by weight of a binder is contained.

2. A method of producing a building material according to claim 1, wherein a silicate-containing material is used which occurs as a by-product of a concrete additive washing installation and/or a mortar additive washing installation and/or a gravel washing installation and/or a sand washing installation, and which has been mechanically activated in the installation by washing with water and with coarse-grained particles with a grain size > 0.1 mm, and at least 50 % by weight of which has a grain size < 0.1 mm,
wherein at least 50 % by weight of the silicate-containing material consists of coarse clay,
and wherein the silicate-containing material is mixed with at least one binder.

3. A method according to claim 2, wherein the mechanically activated silicate-containing material is subjected to at least one post-activation step before it is mixed with the binder.

4. A method according to either one of claims 2 or 3, wherein water is added before, during or after mixing with the binder.

5. A method according to any one of claims 2 to 4, wherein shavings and/or fibres are added to the silicate-containing material.

6. A building element made of a building material according to claim 1 and produced by a method according to any one of claims 2 to 5.

## Revendications

1. Matériau de construction avec un constituant principal composé d'un matériau silicaté,
le matériau silicaté étant un sous-produit d'un laveur d'agrégat de béton et/ou d'un laveur d'agrégat de mortier et/ou d'un laveur de gravier et/ou d'un laveur de sable, le matériau silicaté ayant été activé mécaniquement dans le laveur par lavage à l'eau et avec des particules à gros grains d'une grosseur de grains > 0,1 mm,
au moins 50 % en poids du matériau silicaté présentant une grosseur de grains < 0,1 mm,
au moins 50 % en poids du matériau silicaté se composant de silt,
et au moins 2 % en poids d'un liant étant contenus.

2. Procédé de préparation d'un matériau de construction suivant la revendication 1, un matériau silicaté étant utilisé, qui est un sous-produit d'un laveur d'agrégat de béton et/ou d'un laveur d'agrégat de mortier et/ou d'un laveur de gravier et/ou d'un laveur de sable, et qui a été activé mécaniquement dans le laveur par lavage à l'eau et avec des particules à gros grains d'une grosseur de grains > 0,1 mm et dont au moins 50 % en poids présentent une grosseur de grains < 0,1 mm,
au moins 50 % en poids du matériau silicaté se composant de silt,
et le matériau silicaté étant mélangé à au moins un liant.

3. Procédé suivant la revendication 2, le matériau silicaté activé mécaniquement étant soumis à au moins une post-activation avant le mélange avec le liant.

4. Procédé suivant l'une des revendications 2 ou 3, de l'eau étant ajoutée avant, pendant ou après le mélange avec le liant.

5. Procédé suivant l'une des revendications 2 à 4, des copeaux et/ou des fibres étant ajoutés au matériau silicaté.

6. Élément de construction composé d'un matériau de construction suivant la revendication 1 et préparé à l'aide d'un procédé suivant l'une des revendications 2 à 5.
